Europäisches Patentamt

(19) European Patent Office

Office européen des brevets

(11) Numéro de publication: **0 007 832**

**A1**

(12) **DEMANDE DE BREVET EUROPÉEN**

(21) Numéro de dépôt: 79400457.2

(22) Date de dépôt: 04.07.79

(51) Int. Cl.³: **F 16 J 15/32**
**F 16 C 33/72**

(30) Priorité: 12.07.78 FR 7820826

(43) Date de publication de la demande:
06.02.80 Bulletin 80/3

(84) Etats Contractants Désignés:
AT BE CH DE GB IT LU NL SE

(71) Demandeur: Societe dite: CHROMEX S.A.

F-91510 - Lardy(FR)

(72) Inventeur: De Pretto, Alain
32, rue des Archers
F-91310 Montlhery(FR)

(72) Inventeur: Le Treis, Marc
16, rue J.E. Guettard
F-91150 Etampes(FR)

(74) Mandataire: Petit, Alain et al,
OFFICE JOSSE & PETIT 126 Boulevard Haussmann
F-75008 Paris(FR)

(54) **Joint tournant entre pièces coaxiales.**

㉗ Joint tournant entre deux pièces coaxiales, comprenant une armature métallique de montage (1-2) et une garniture en élastomère (3), caractérisé en ce que ladite armature métallique (1-2) est constituée à l'aide de deux anneaux (1-2) de section générale en L ayant une disposition tête-bêche pour former un logement renfermant ladite garniture (3), celle-ci étant constituée d'un corps annulaire (3) en élastomère pourvu d'une pellicule anti-friction (4) annulaire destinée à coopérer comme surface de friction avec au moins l'une des branches de l'un des L (1-2).

Application aux joints d'arbres et de roulements.

FIG.1

Croydon Printing Company Ltd.

EP 0 007 832 A1

1

La présente invention se rapporte à un joint tournant entre pièces coaxiales comprenant une armature métallique de montage constituée de manière connue à l'aide de deux anneaux de section générale en L disposés tête-bêche pour former un logement renfermant une garniture de friction et étanchéité et destinés à être respectivement montés par emmanchement avec la pièce coaxiale correspondante.

De tels joints sont ordinairement constitués de pièces séparables posant des problèmes de conditionnement, transport, manutention et montage.

L'invention a pour objet de remédier à ces inconvénients en constituant le joint sous forme d'un ensemble monobloc résistant à toute manutention de transport ou montage, lui conférant un positionnement facile de montage résultant du seul emmanchement conjoint des anneaux d'armature, tout en conservant cependant toute faculté désirable d'absorption des défauts d'alignement ou de concentricité desdites pièces coaxiales.

Essentiellement, à cet effet, le joint tournant du genre précité est caractérisé en ce que l'un desdits anneaux en L présente un rebord de retenue axiale de l'autre formé après montage entre eux de la garniture.

L'invention se rapporte aussi à des dispositions complémentaires relatives à l'étanchéité assurée dans une telle structure de joint monobloc.

Plusieurs formes de réalisation de joints tournants selon l'invention sont d'ailleurs ci-après décrites à titre d'exemple et en référence au dessin annexé dans lequel :

- la figure 1 est une vue en coupe transversale d'une première réalisation de joint tournant selon l'invention ;

- la figure 2 est une vue en coupe axiale partielle d'une application d'un tel joint tournant à un roulement à billes ;

- la figure 3 est une vue en coupe axiale d'une application d'une telle paire de joints tournants comme palier autolubrifiant ;

- la figure 4 est une vue en coupe transversale d'une variante de réalisation d'un joint tournant selon l'invention ;

- la figure 5 est une vue en coupe transversale d'un joint tournant analogue à celui de la figure 1 ;

- la figure 6 est une vue en coupe transversale d'un tel joint modifié par adjonction d'un ressort d'appui axial ;

- la figure 7 est une vue en coupe transversale d'un joint tournant à garniture à lèvres frottantes ;

- la figure 8 est une vue en coupe transversale d'un joint tournant à garniture à lèvres frottantes et ressort d'appui axial.

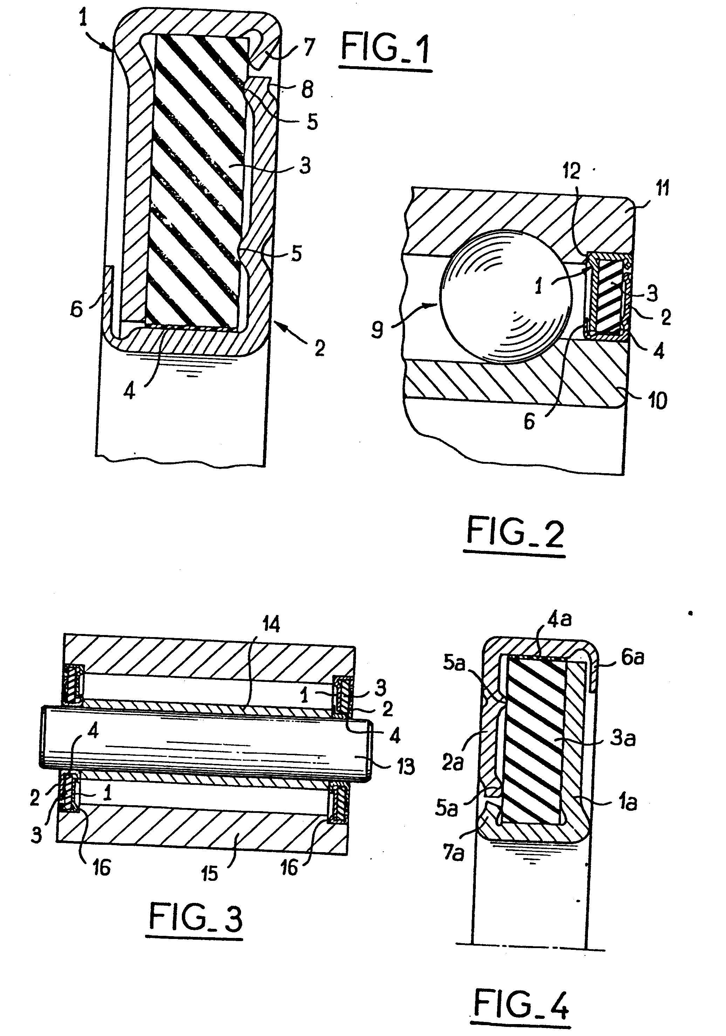

Le joint tournant représenté à la figure 1 est figuré dans l'état qu'il est amené à prendre une fois monté entre deux pièces coaxiales non représentées. Il comprend une armature métallique constituée à l'aide de deux anneaux 1 et 2 de section générale en L ayant une disposition tête-bêche pour former un logement quadrangulaire renfermant la garniture du joint, et dont les branches cylindriques des L sont destinées à être rendues respectivement solidaires des deux pièces coaxiales. La garniture est constituée d'un corps annulaire 3 en élastomère, de section générale rectangulaire et pourvu suivant son diamètre interne d'une pellicule anti-friction 4, ici constituée de préférence en polytétrafluoroéthylène. Cette pellicule 4 coopère comme surface de friction avec le diamètre externe de la branche cylindrique du L de l'anneau 2.

De par le montage des anneaux 1, 2 dans les pièces co-axiales, les branches opposées des L latérales au corps de garniture 3 sont amenées à former organes de pression de celui-ci dans son logement. Il est prévu, entre la branche du L de l'anneau 2 adjacente à sa branche cylindrique et le corps 3, une surface d'appui réciproque restreinte par rapport à celle de la branche latérale opposée de l'autre L, ici assurée par l'intermédiaire de nervures circulaires 5 ménagées sur l'anneau 2.

On conçoit déjà que lorsque les anneaux 1 et 2 sont entraînés en rotation relative avec les deux pièces coaxiales dont ils sont respectivement solidaires, la garniture 3, 4 va rester solidaire de l'anneau 1 tandis qu'elle va assurer une étanchéité de contact avec l'anneau 2 par frottement glissant de sa pellicule anti-friction 4 avec la branche cylindrique de cet anneau, ainsi qu'ici par frottement glissant de son corps 3 avec les sommets des nervures 5.

On dispose ainsi d'une excellente étanchéité à l'endroit de la pellicule anti-friction 4, tandis que les nervures espacées 5, dont le nombre peut être varié, forment des chicanes utiles vis-à-vis des agents situés du même côté qu'elles du joint.

On notera à cet égard que dans les applications entre arbres tournants, bagues de roulements ou équivalentes, il se produit dès les premiers tours de rotation une "bakélisation" du corps 3 de l'élastomère au contact des nervures 5, réduisant leur coefficient de frottement, de même qu'il se produit un dépôt de polytétrafluoroéthylène (PTFE) de la pellicule 4 sur la branche cylindrique correspondante de l'anneau 2, réduisant ainsi leur coefficient de frottement par un contact PTFE sur PTFE, de sorte que le joint tournant n'introduit qu'un très faible couple de frottement entre les pièces axiales considérées.

Bien entendu, la garniture assure simultanément une étanchéité statique convenable avec l'anneau 1 contre lequel elle s'appuie.

On voit à la figure 1 qu'afin de disposer du joint tournant seul sous forme d'un élément monobloc, l'anneau 2 présente un rebord 6 de retenue axiale de l'autre anneau 1, ce rebord étant replié après montage entre eux de la garniture 3, 4.

En outre, l'anneau 1 présente aussi de préférence un rebord de pincement 7 du corps de garniture qui en est solidaire en rotation comme on l'a déjà dit. De plus, ce rebord 7 est alors conformé en forme évasée vers l'extérieur, de même que l'extrémité de la branche voisine de l'autre L que forme l'anneau 2 l'est en 8, cette forme étant ici associée à la formation de l'une des nervures 5, et ces dispositions visant à rejeter vers l'extérieur une grande proportion des impuretés susceptibles d'entrer vers l'intérieur du joint, tant en position statique que dynamique.

On a illustré à la figure 2 une application d'un tel joint tournant dans un roulement à billes 9, où il est directement emmanché dans l'intervalle entre les bagues interne 10 et externe 11 du roulement, cette dernière présentant un épaulement d'arrêt 12 de l'anneau 1 du roulement, de sorte que le joint est correctement positionné par une simple poussée latérale d'emmanchement de l'ensemble des deux anneaux jusqu'à butée de l'anneau 1.

On notera que le rebord 6 de l'anneau 2 du joint est en outre utilisé ici comme déflecteur pour le lubrifiant situé du côté intérieur au roulement.

On a illustré à la figure 3 l'application intéressante précédemment évoquée d'un tel joint tournant comme palier autolubrifiant, dès lors que la garniture est à même de supporter élastiquement la charge du palier dans la limite du débattement radial possible prévu entre les anneaux 1 et 2, étant à voir que la forme en anneau de la garniture se prête précisément à cette fonction éventuelle de coussinet élastique.

On voit ainsi à la figure 3 une paire de joints tournants tels que celui de la figure 1, dont les anneaux 2 sont emmanchés sur un arbre 13, de part et d'autre d'une entretoise tubulaire 14, et dont les anneaux 1 sont simultanément emmanchés dans un moyeu 15, ici pourvu aussi de logements de butée épaulés en 16.

On a illustré à la figure 4 une variante de réalisation d'un joint tournant selon l'invention, dans laquelle l'étanchéité par la pellicule anti-friction 4a se trouve reportée à la périphérie de la garniture, la disposition des anneaux 1a et 2a étant inversée par rapport à celle de la figure 1, et les autres éléments équivalents y étant désignés par les mêmes chiffres de référence affectés de l'indice a.

On remarquera que les garnitures 3, 4 peuvent avantageusement être fabriquées par tronçonnage à longueur de barres tubulaires, chacune constituée d'un manchon d'élastomère moulé autour d'une feuille mince de PTFE enroulée autour d'un noyau et adhérisée avec l'élastomère lors du moulage.

Il va de soi que la nature de l'élastomère notamment reste affaire de choix en fonction de la nature des fluides pour lesquels l'étanchéité est recherchée, de même que les anneaux métalliques peuvent être soumis à un traitement anti-corrosion correspondant.

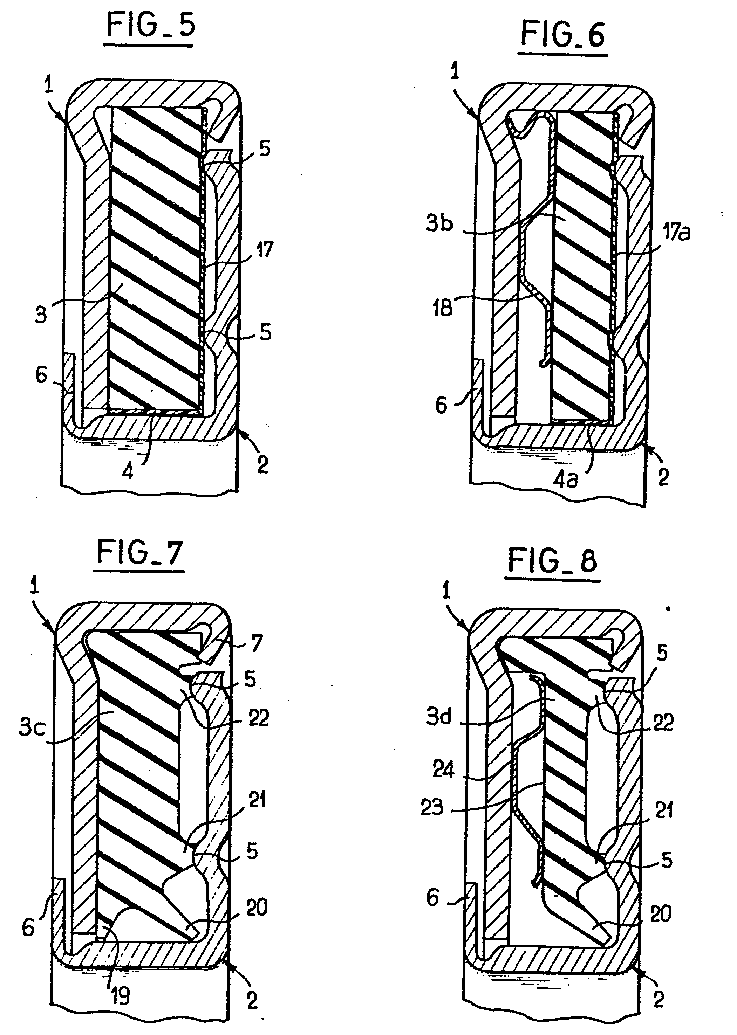

Le joint tournant représenté à la figure 5 est figuré dans l'état qu'il est amené à prendre une fois monté par emmanchement respectif de ses anneaux métalliques en L 1 et 2, entre deux pièces coaxiales non représentées. La garniture d'étanchéité disposée dans le logement que forment les anneaux 1 et 2 avant repliage du rebord de retenue axiale 6 conduisant à un joint monobloc, est ici constituée d'un corps annulaire 3 en élastomère de section générale rectangulaire pourvu suivant son diamètre interne d'une pellicule anti-friction adhérisée 4, de préférence à base de polytétrafluoroéthylène, et il lui est en outre associé latéralement une rondelle anti-friction 17, de préférence aussi à base de polytétrafluoroéthylène, coopérant avec les sommets des nervures circulaires 5 ménagées sur la branche latérale de l'anneau 2.

La garniture est conformée de façon à être soumise à une légère contrainte élastique radiale de montage dans son logement assurant la coopération de friction entre la pellicule 4 et la branche cylindrique de l'anneau 2, tandis qu'une contrainte axiale prédéterminée, assurant la coopération de friction entre rondelle 17 et nervures 5, résulte de l'emmanchement conjoint des deux anneaux 1 et 2 par une poussée latérale d'ensemble les amenant dans la position relative représentée (poussée exercée de la droite dans le cas présent de la figure 5).

La figure 6 correspond à une variante de la précédente où, dans le but de mieux maitriser la pression axiale prédéterminée et notamment d'en mieux garantir son maintien dans le temps, la garniture 3b est réduite en dimension axiale pour ménager la place à un ressort d'appui axial 18 interposé entre elle et l'anneau 1 par rapport auquel elle reste statique, étant pourvue comme précédemment d'une pellicule anti-friction 4a et d'une rondelle anti-friction 17a de coopération avec l'anneau 2.

Le joint tournant représenté à la figure 7 comprend lui aussi deux anneaux métalliques en L 1 et 2. La garniture d'étanchéité disposée dans le logement que forment les anneaux 1 et 2 avant repliage du rebord de retenue axiale 6 est ici constituée d'un corps annulaire 3c en élastomère pourvu de lèvres frottantes destinées à coopérer avec l'anneau 2 pour assurer l'étanchéité dynamique du joint, ici encore figuré dans l'état qu'il est amené à prendre une fois monté.

Le corps circulaire 3c est en appui statique contre l'anneau 1 qui présente un rebord de pincement 7 du corps 3c à l'opposé du rebord 6, tandis que vers l'angle de ce dernier le corps 3c se termine

0007832

latéralement par une lèvre d'appui 19 sur l'anneau 1, légèrement espacée de l'anneau 2.

Les lèvres frottantes comprennent ici une lèvre 20 à appui radial de flexion sur la branche cylindrique de l'anneau 2, ainsi que deux lèvres frontales 21, 22 respectivement destinées à coopérer aussi par déformation élastique d'appui axial avec les sommets des deux nervures 5 que présente la branche latérale de l'anneau 2.

La figure 8 correspond à une variante de la précédente où, dans le but de mieux maîtriser la pression axiale prédéterminée et notamment d'en mieux garantir son maintien dans le temps, le corps de garniture 3d présente latéralement, face à l'anneau 1, une cavité circulaire 23 de réception d'un ressort d'appui axial 24.

La garniture présente des lèvres frottantes 20, 21, 22 comme précédemment.

Bien entendu, diverses variantes peuvent encore être imaginées dans le cadre de l'invention principalement illustrée par ces réalisations.

Revendications de brevet

1. Joint tournant entre deux pièces coaxiales, comprenant une armature métallique de montage constituée à l'aide de deux anneaux de section générale en L disposés tête-bêche pour former un logement renfermant une garniture de friction et étanchéité et destinés à être respectivement montés par emmanchement avec la pièce coaxiale correspondante, caractérisé en ce que l'un desdits anneaux en L présente un rebord de retenue axiale de l'autre formé après montage entre eux de la garniture.

2. Joint tournant selon la revendication 1, caractérisé en ce qu'à l'opposé dudit bord de retenue l'autre anneau en L présente un rebord de maintien axial ou pincement de ladite garniture.

3. Joint tournant selon l'une des revendications précédentes, caractérisé en ce que la garniture est constituée d'un corps annulaire en élastomère pourvu d'une pellicule antifriction annulaire qui est destinée à coopérer au moins avec la branche de l'anneau en L se terminant par ledit rebord de retenue.

4. Joint tournant selon la revendication 3, caractérisé en ce que la branche de l'anneau en L adjacente à celle se terminant par ledit bord de retenue présente des saillies circulaires d'appui restreint avec ledit corps annulaire de la garniture.

5. Joint tournant selon l'une des revendications précédentes, caractérisé en ce que ledit rebord de retenue est disposé de façon à former déflecteur du côté du fluide à étancher.

6. Joint tournant selon l'une des revendications 2 à 5, caractérisé en ce que ledit rebord de maintien axial ou pincement de la garniture d'un des anneaux en L présente une forme évasée vers l'extérieur de la garniture de même que la partie terminale de la branche voisine de l'autre anneau en L.

7. Joint tournant selon la revendication 1, caractérisé en ce qu'il englobe un ressort de maintien de la garniture en appui axial de friction contre la branche de l'anneau en L adjacente à celle avec laquelle la garniture coopère par friction radiale.

8. Joint tournant , selon la revendication 1, caractérisé en ce que la garniture en élastomère a son appui radial de friction assuré contre la branche du L adjacente audit rebord de retenue axiale par l'intermédiaire d'une lèvre à appui de flexion.

9. Joint tournant, selon la revendication 7 ou 8, caractérisé en ce que la garniture en élastomère présente comme appui axial de friction au moins une lèvre frontale destinée à coopérer avec la branche de l'anneau en L adjacente à celle se terminant par ledit rebord de retenue.

0007832

1/2

FIG_1

FIG_2

FIG_3

FIG_4

## FIG_5

## FIG_6

## FIG_7

## FIG_8

0007832

**Office européen des brevets**

# RAPPORT DE RECHERCHE EUROPEENNE

Numéro de la demande

EP 79 40 0457

| Catégorie | Citation du document avec indication, en cas de besoin, des parties pertinentes | Revendication concernée |
|---|---|---|
| X | <u>GB - A - 590 874</u> (ANGUS)<br><br>* Page 2, lignes 23-67; figures 3-4 *<br><br>-- | 1-3,<br>5-9 |
| X | <u>US - A - 3 479 728</u> (BURFIELD)<br><br>* Colonne 2, ligne 67 - colonne 4, ligne 40; figures 1,2,9,10 *<br><br>-- | 1,5,8 |
| | <u>US - A - 3 510 138</u> (BOWEN)<br><br>* Colonne 4, ligne 22 - ligne 75; Figures 4-5 *<br><br>-- | 1,3-5,<br>8,9 |
| | <u>US - A - 2 478 140</u> (ULSETH)<br><br>* Colonne 3, ligne 61 - colonne 4, ligne 14; figure 4 *<br><br>-- | 2,4,7 |
| | <u>US - A - 2 051 304</u> (LEISTER)<br><br>* Page 1, colonne de gauche, ligne 21 - colonne de droite, ligne 1; figures *<br><br>-- | 2,5,6 |
| | <u>DE - B - 1 151 415</u> (SKF)<br><br>* Colonne 3, lignes 10-32; figure 2 *<br><br>-- | 1 |
| | <u>FR - A - 2 033 628</u> (SIMCA)<br><br>* Page 1, ligne 1 - page 3, ligne 30; figures *<br><br>---- | 3 |

**DOCUMENTS CONSIDERES COMME PERTINENTS**

**CLASSEMENT DE LA DEMANDE (Int. Cl. 3)**

F 16 J 15/32
F 16 C 33/72

**DOMAINES TECHNIQUES RECHERCHES (Int. Cl. 3)**

F 16 J
F 16 C
B 65 G

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-09-1979 | LEGER |

OEB Form 1503.1   06.78